# EUROPEAN PATENT APPLICATION

(11) **EP 1 840 173 A1**
(43) Date of publication of application: **03.10.2007**
(21) Application number: 07006050.4
(22) Date of filing: 23.03.2007
(51) Int. Cl.: C09D 5/04, C09D 7/00, C09D 13/00

(54) **Aqueous solid paint composition comprising a salt of a fatty acid**

(30) Priority: 31.03.2006 GB 0606468; 02.08.2006 GB 0615349
(71) Applicant: IMPERIAL CHEMICAL INDUSTRIES PLC, London W1U 3AN (GB)
(72) Inventor: Williams, Neal St John, Warfield Berkshire RG42 3JN (GB)

(57) **Abstract**

An aqueous paint composition comprising
i) a binder polymer
ii) a salt of a fatty acid of linear chain length of from 10 to 26 carbon atoms said composition capable of being formed into a self-supporting, dimensionally stable paint body.

## Description

This invention relates to dimensionally stable coating compositions, in particular architectural paint compositions for structures such as buildings; and a process for making said solid paint and a process of painting.

Applying coatings such as paint and varnish to any substrate generates mess. This is especially so when painting large areas such as walls, ceilings or floors, for example in the home or in public buildings. The simple act of applying the paint to a surface by brush or roller produces fine droplets or spatter which can fall on unprotected surfaces, which subsequently have to be cleaned. This is irritating for the amateur painter and time-consuming and thus costly for the professional. The act of cleaning may itself cause further damage. In addition, the painting tools must be cleaned when the work is complete adding yet more time and effort to the job, as well as causing polluted waste water.

Because of this preparation time and clean-up time, there is a natural resistance to painting, especially by the amateur. There is a need therefore to provide coatings in an easy to use form that cause reduced mess and require minimum cleaning of tools.

Attempts have been made in the past to address some of these problems. For example European Patent EP144135 discloses a lidded container containing an aqueous paint composition, the paint being sufficiently structured or gelled, using titanium or zirconium chelates, that it may be applied direct to a roller without the need to first transfer it to a separate tray. Such paint, however, cannot be formed into a body or block strong enough to enable it to be applied directly to a substrate. Similarly, Canadian Patent CA 889886 discloses an aqueous paint composition comprising a combination of microbial polysaccharide and a Group IVB metal chelate as a gelling system. The resulting paint is sufficiently structured to be dimensionally stable. However, the structure is not strong enough to enable the paint to be applied directly to the substrate. Application is by conventional means such as roller. Furthermore, the gelling system is water soluble, resulting in inadequate water resistance of the final dried paint. United States patent US 3994848 discloses a solventborne paint composition comprising ionic crosslinking agent and which is formable into a dimensionally stable bar. The bar may be applied directly to a substrate such as a wall. However, the high volatile organic content (VOC) of the composition makes it environmentally unfriendly and, in any case, the odours released, especially in a poorly ventilated space, are unpleasant and can produce adverse health effects.

We have now produced improved paint compositions which overcome the deficiencies of the prior art paints and which have excellent overall properties.

The use of the term paint in this specification is intended to include all protective and decorative paint compositions for use in buildings and gardens especially structures such as houses, apartments, hospitals, schools and offices and includes pigmented wall, ceiling and floor paints, clear varnishes, woodstains and metal care paints.

Accordingly, in a first aspect of the invention there is provided an aqueous paint composition comprising a binder polymer and a salt of a fatty acid of linear chain length from 10 to 26 carbon atoms said composition capable of being formed into a self-supporting, dimensionally stable paint body.

In a second aspect of the invention there is provided an aqueous paint composition comprising a binder polymer and a salt of a fatty acid of linear chain length from 10 to 26 carbon atoms when formed into a self-supporting, dimensionally stable paint body for applying directly to a substrate by contacting an exposed surface of the body onto the substrate and which under the application of sufficient shear stress and/or shear rate in the contact zone between the composition and the substrate renders the composition flowable.

The paint composition may contain rheology modifying agents, such as thickeners. Thickeners can be organic or inorganic. The organic thickeners include polymeric materials, such as the natural gums and resins, for example gum arabic and sodium, alginate and the synthetic types such as polyvinyl alcohol, cellulose derivatives such as carboxy methyl cellulose, hydroxyl ethyl cellulose and polyacrylamide. Another class of the organic thickeners is the alkali swellable emulsion thickeners. These are typically internally crosslinked microparticles of high acid content which on addition of base swell as a result of water and solvent ingress. The inorganic thickeners include the clay thickeners. These are naturally occurring or synthetic clays such as bentonite, which is mainly montmorillonite (Na, Ca)_{0.3} (Al, Mg)₂ Si₄O₁₀ (OH)₂ .n(H₂O); Veegum and Vangel which are both smectite clays, which itself is (Na, Ca) Al₄ (Si, Al)₈O₂₀(OH)₄.2(H₂O); hectorite, which is a type of smectite, Na_{0.3}(Mg,Li)₃Si₄O(F,OH)_{2;} Pangel HV, a hydrated magnesium silicate and Laponite, a synthetic hectorite (hydrous sodium lithium magnesium silicate). Suitable examples of Laponite include RD, RDS, S482 and SL25.

These thickeners can be included in the paint composition to modify the rheology behaviour. They are particularly useful in preventing the paint from sagging or running when applied on substrates which are not completely smooth, such as embossed wallpapers, woodchip or blown vinyl wallcoverings.

Whilst not wishing to be bound by this, it is thought that such substrates tend to impart greater shear on the paint body during application resulting in more of the paint turning to liquid, which then pools in the valleys causing runs. Preferably clay, thickeners are used, more preferably they are used from 0.1 to 5%, even more preferably from 0.1 to 2% and most preferably from 0.1 % to 1% by weight on total composition.

By paint body is meant the self-supporting, dimensionally stable paint composition described above when formed into any shape suitable for painting. Preferably the paint body is shaped as a block having at least one, preferably flat, exposed surface which is used to apply the paint directly to the substrate. The surface in contact with the substrate is the contact zone.

The paint body effectively behaves as a solid of very high viscosity at low shear stress. Unlike a true solid, however, when sufficient shear stress is put on it, it will flow and behave like a liquid, albeit a non-Newtonian one. The shear stress above which the paint starts to flow is the yield stress.

In use, the mechanical conditions in the region of the contact zone are such that the solid body can be easily spread upon the substrate. The required conditions are that the shear stress exceeds the yield stress and/or that a high rate of shear is achieved, so that in the region of the contact zone only, the solid paint is converted into a liquid, whilst the bulk of the body remains solid.

In another aspect of the invention, the body is formed into a self-supporting dimensionally stable block of paint, optionally pigmented, carried on an application member to form a painting assembly. The paint is sufficiently structured that it may be applied directly to a wall by simply contacting the block of paint with the wall and wiping it across the area of the wall that is to be painted. The combined action of wiping and pressing against the substrate to be painted generates sufficient shear stress to exceed the yield stress, liquefy and spread the paint. Thus no applicator, such as a brush or roller, is required. Because of this, there is no soiled applicator to clean when painting is finished. An additional advantage is that if painting is interrupted, the paint block is simply sealed in a container ready for use at a later time.

By aqueous is meant that at least 50% of the total volatile content of the composition is water ensuring that the VOC is minimised. Preferably the VOC is from 0 to 20%, more preferably from 0 to 10%, even more preferably from 0 to 5% and most preferably it is 0%.

By self-supporting, dimensionally stable is meant that the composition is solid enough to retain the shape into which it has been formed, without the need for a container to support it. Also, it must be-able to substantially retain its dimensions during the painting or application process. In other words, when in the form of a paint block, for example, the paint should be able to withstand the forces imparted on it without breaking up, whilst allowing a film of liquid paint to flow on to the substrate during painting. Clearly some reversible, transient deformation of the paint body or block will occur, but not to the extent that interrupts or prevents painting.

Preferably, the paint composition should have a hardness as measured by the method and apparatus described hereinbelow of at least 40g, more preferably from 50 to 750g, even more preferably from 50 to 600g, still more preferably from 70 to 500g, yet more preferably from 75 to 450g and most preferably from 75 to 400g. Paint compositions of hardness values greater than 1000g are difficult to apply and are thus best avoided.

Preferably, the paint composition should retain its dimensional stability over a wide temperature range. However, paint compositions containing fatty acid salts exhibit a melting temperature above which they become substantially liquid. Preferably, they have a melting temperature of at least 40°C, more preferably 50°C.

The shear stress necessary to render the paint flowable, alternatively referred to as the yield stress, should be sufficiently low that the paint may be applied by hand. Preferably, the yield stress, as measured by the method and apparatus described hereinbelow, should be greater than 350 Pa, more preferably greater than 1,500 Pa, yet more preferably greater than 2,000 Pa and most preferably from 2,000 to 20,000 Pa.

Once the yield stress is exceeded the paint behaves as a fluid. Preferably the high shear viscosity is from 0.05 to 0.50 Pa.s measured at 10,000 s⁻¹ and 25°C, more preferably less than 0.40 Pa.s and most preferably from 0.10 to 0.35 Pa.s. Too high a high shear viscosity results in the paint being difficult to apply and spread evenly on the substrate.

The preferred high shear viscosity and yield stress also depends on the area of the paint body in contact with the substrate. As this contact zone area increases, the effort needed by the user to overcome the resisting, or drag force arising from these parameters, also rises. Thus, a paint body having a smaller contact zone area can be formulated with a higher high shear viscosity and/or yield stress than one shaped to have a larger contact zone. In principle, for a given high shear viscosity, the drag force will be in direct proportion to the contact zone area. Of course, the total force felt by the user will depend on other factors too, such as the smoothness and porosity of the substrate; the total weight of the paint body. These factors can be balanced by the paint formulator to produce a painting assembly that is convenient to use.

The medium shear viscosity measured on a Rotothinner viscometer is preferably from 0.1 to 10 Pa.s. Below the lower viscosity limit the paint will tend to run, causing sags and drips, whilst above the upper limit the paint will feel sticky during application resulting in thick, uneven paint films that do not flow very well and that leave an uneven dried surface.

The self supporting, dimensional stability of the composition is provided by a fatty acid salt structuring agent. More preferably, the coating composition further comprises a thermal stabilising agent. Thermal stabilising agents serve to increase the dimensional stability of the solid paint when formed into a paint body, especially at elevated temperatures. These agents are discussed in more detail below.

We have found that the hardness and yield stress increases as the fatty acid chain length increases and thus less of the fatty acid salt is required on a weight basis, in the paint formulation. Usually, at least 1% by weight, preferably from 1 to 14%, of the salt based on overall formulation is required to achieve adequate structure. As a guide, preferably from 2 to 5%, more preferably from 2.5 to 4.5% of arachidic (carbon chain length 20; denoted as C₂₀) or behenic fatty acid (C₂₂) salt is required; preferably from 2.5 to 7.0%, more preferably from 2.5 to 4.5% of stearic acid (C₁₈) salt; preferably from 4 to 7%, more preferably from 4 to 6% of hexadecanoic acid (C₁₆) salt; preferably from 5 to 8 % of tetradecanoic acid (C₁₄) salt and from 8 to 14% of lauric acid (C₁₂) and decanoic acid (C₁₀) salt. Fatty acids of carbon chain length greater than 22 are difficult to obtain but we believe that fatty acid salts up to and including C₂₆ are useful in the invention. Fatty acid salts with carbon chain length less than about 10 produce so little structure that they are not especially useful in this invention.

The level and type of fatty acid salt is selected so that sufficient structure is generated to give the paint the solidity required to make it self-supporting whilst not causing the yield point and/or high shear viscosity to be so high that it becomes difficult to impart sufficient shear stress to make the paint flow, especially by hand. Similarly, the chain length of the fatty acid salt must not be so short that the paint, when formed into a block and applied to a substrate, is too weak to be self-supporting.

The fatty acid may be branched or linear; unsaturated or saturated and of linear carbon chain length of from 10 to 26. Advantageously, the fatty acid is a saturated aliphatic acid of linear carbon chain length from 10 to 26 carbon atoms. More preferably, the carbon chain length is from 12 to 24 and most preferably it is from 14 to 22.

It is thought that the structuring agent produces a three dimensional structure throughout the paint body which is strong enough at rest or low shear stress to be self-supporting, but which in regions of high shear stress and/or high shear rate, such as found in the zone between the paint body and the surface being painted, breaks down easily so that the paint becomes fluid enough to be easily spread to form a film of wet coating preferably of 10 to 150 microns, more preferably from 10 to 70 microns and most preferably from 40 to 70 microns thick. However, the viscosity of the paint at low and medium shear rates of up to about 300 s⁻¹ must not be so low that the paint sags forming unsightly runs.

Too much branching in the fatty acid reduces the hardness of the paint and its yield stress to the extent that it is no longer self-supporting.

Preferably, branched fatty acids should comprise less that 25% of the fatty acid used by weight.

Too much unsaturation also causes a reduction in the structure. Preferably, unsaturated fatty acids should comprise less that 10% of the fatty acid used by weight.

Whilst not wishing to be bound by this theory, it is thought that the fatty acid salt forms a three dimensional matrix of crystals holding the composition together and thereby providing the dimensional stability, but which can be broken down at high shear.

Commercially available fatty acids are usually obtained from plant material and comprise mixtures of different fatty acids. Nevertheless, they can be used so long as the average chain length and unsaturation is within the limits described above. However, whichever fatty acid is selected, it is preferable to use the purest form available as this produces the hardest paint and the most stable hardness when exposed to elevated temperature. This is especially so when the paint body is exposed to temperatures which cycle above and below its melting temperature.

Suitable examples of fatty acid include lauric acid (C₁₂), myristic acid (C₁₄), palmitic acid (C₁₆), stearic acid (C₁₈), arachidic acid (C₂₀), behenic acid (C₂₂), lignoceric acid(C₂₄), gadoleic acid (C₂₀), erucic acid (C₂₂) and mixtures thereof.

The fatty acid is converted to the salt form by contacting the fatty acid with a neutralising base. The salt may be added preformed to the paint or may be formed in situ by adding the fatty acid and neutralising base separately to the paint. Preferably the fatty acid salt is neutralised prior to being added to the paint as this results in improved application properties. Whilst not wishing to be bound by this it is thought that some of the fatty acid remains unneutralised and acts a lubricant under shear during application.

The neutralising base may be an organic base such as ammonia or amine or, more preferably, an alkali metal hydroxide such as sodium hydroxide, potassium hydroxide and lithium hydroxide. Sodium hydroxide is most preferred as this provides a good combination of structure, providing dimensional stability and ease of application.

The hardness of the composition is affected by temperature, with increasing temperature resulting in reduced hardness. This causes the paint body to lose its dimensional stability. In effect, the composition starts to melt and soften becoming more liquid-like and non-self supporting. Clearly, this is a problem if it happens at temperatures close to the ambient temperature at which it is to be used to paint a substrate. It is thought that the effect is related to the Krafft temperature. The Krafft temperature is the minimum temperature above which surfactants, such as salts of fatty acids, form micelles. Below this temperature micelles do not form and the surfactant exists in its crystalline form even in aqueous solution. In the micellar form, the surfactant exhibits low viscosity, whereas in the crystalline form the viscosity is much higher and in the present invention provides the self-supporting structure of the composition.

Using longer chain fatty acids, for example, of carbon chain length greater than 22 helps, as it raises the melting point. However, compositions containing such longer chain fatty acids have a higher yield stress and require higher shear to make them flow. They thus require greater effort by the user to apply to a substrate, especially to a wall or ceiling in a large room. It is also more difficult to produce smooth final coatings. In addition, the availability of the longer chain fatty acids is more difficult.

The dimensional stability of the composition can be enhanced by adding thermal stabilising agent. Such agents, in combination with the salt of the fatty acid, increase the hardness and melting temperature of the paint composition. In other words, for a given amount and type of fatty acid, not only is the hardness of the paint composition raised but the temperature at which the paint is no longer dimensionally stable is increased. A further advantage of adding the stabilising agent is that should the temperature of the composition rise close to or above its melting temperature, the hardness and thus the dimensional stability recover more quickly on cooling, and to a greater extent, than if a stabilising agent was not used. This is advantageous as it means that temperature controlled storage is not necessary and furthermore, the paint composition need not be changed to suit different climatic conditions.

Surprisingly, we have found that suitable such thermal stabilising agents consist of a diverse group of compounds including alkali metal salts such as the halides; and certain sequestering agents. They appear to fall within the group known as builders. Builders are used in the field of detergents, where they are added to enhance the cleaning action of the detergent.

Preferred alkali metal halides include the alkali metal chlorides such as lithium chloride, sodium chloride and potassium chloride. Most preferred of the alkali metal chlorides is sodium chloride as it is readily available and produces a good balance of hardness and ease of spreading the paint.

By sequestering agent is meant the class of compounds having moieties that are capable of chelating with dissolved metal ions. Preferred sequestering agents include tetrasodium pyrophosphate and tetrasodium iminodisuccinate, also available as Baypure CX100 from Bayer Chemicals. Most preferred is tetrasodium pyrophosphate as it is effective at low levels and produces greater hardness than the alkali metal halides.

It is not known how such diverse classes of compounds produce the effects described above. These are surprising and unexpected results.

The amount of the thermal stabilising agent added will vary according to the hardness and melting temperature required. Preferably, it is from about 0.10 to 5.0% by weight calculated on the total weight of the composition, more preferably from 0.10 to 3% and most preferably from 0.15 to 2.5% as this produces the best balance of hardness and ease of painting.

Most preferably, the coating composition of the invention comprises a
i) film forming resin
ii) fatty acid salt, preferably from 1 to 14%
iii) thermal stabilising agent, preferably from 0.1 to 5.0% calculated on the total weight of the composition.

The dimensional stability is also affected by water insoluble solvents, by which is meant those having water solubility in water of less than 15 weight % at 25°C. Such solvents include mineral spirits such as Shellsol T™, diesters such as Coasol™, benzyl alcohol and the ester alcohols such as Texanol™. Other solvents are also available, such as the mono-propyl and mono-butyl ethers of ethylene glycol and propylene glycol; and the diglycols. It is thought that such solvents break-up the crystalline structure of the fatty acid salt. However, they need not be avoided altogether since up to 15% by weight on total coating composition may be tolerated, more preferably 10%, yet more preferably 5% and most preferably from 0 to 3% by weight is used. Solvents that swell or dissolve the fatty acid salt are to be especially kept to a minimum or avoided altogether.

In a further aspect of the invention there is provided a process of making the coating composition comprising the steps of
i) providing a mixture comprising film forming resin, fatty acid salt and optionally thermal stability agent
ii) converting the mixture into a coating composition
iii) causing the temperature of the coating composition to exceed the melting temperature of the fatty acid
iv) allowing or causing the temperature to fall sufficiently that the coating composition becomes a self-supporting and dimensionally stable paint body at temperatures below 40°C.

Preferably, the cooling step is performed in a container, mould or die so that after cooling, the paint body has the desired shape. In order for the user to conveniently handle the body and generate sufficient shear evenly across the contact zone of the paint body and the substrate to be painted, it is advantageously attached to a base plate using attachment means. On one surface of the plate is attached an absorbent means such as a sponge, a felt type material or a reticulated foam. Where the absorbent means is sponge, felt or reticulated foam, the attachment means may be adhesive, especially a hot melt adhesive. The base plate, with the attached absorbent means, is placed in the bottom of the mould and the hot liquid paint poured into the mould. Whilst liquid, some of the paint flows into the absorbent means which on solidification anchors the paint to the base plate. Preferably on the other side of the plate are attachment means for a handle to be connected. In this way, the user may paint a wall, for example, without directly holding the paint body.

The dimensional stability of the paint composition according to the invention also means that a paint block of two or more colours can be made. When the two colours are arranged as stripes in the block, stripes may be applied quickly and directly to the substrate using a single action rather than having to mask off and carefully paint using a paint brush or roller.

The heating step may be carried out in a conventional vessel, heated for example using hot water or induction heating, before being transferred to the mould or container for cooling. Alternatively, the coating composition of step ii) may be filled into a container, mould or die and heated in situ, by heating means and then subsequently cooled to below its melting temperature. Suitable heating means include microwave radiation, radiant heat, hot water or steam.

Alternatively, a previously made paint may be used to which is added the structuring agent of fatty acid salt and optionally the alkali metal salt thermal stabilising agent followed by heating above the Krafft temperature of the fatty acid salt and subsequent cooling.

In a yet further aspect of the invention there is provided a paint block in a resealable container. This enables the painter, when interrupted, to seal the paint block in an air-tight container thereby preventing the paint from drying. When the painter is ready to resume painting, he simply removes the paint block from the container and continues painting without any risk that the paint will have dried on the brush or roller in the meantime.

In a still further aspect of the invention there is provided a process of painting using a paint composition according to the invention comprising contacting an exposed surface of the paint body onto a substrate to be coated and applying sufficient shear stress and/or shear rate at the contact zone between the composition and the substrate such that the yield point is exceeded and the coating flows to leave a substantially uniform coating layer on the substrate.

The invention also provides a structure, part of a structure or article painted with a paint composition according to the invention.

Suitable binder polymers include addition polymers and condensation polymers. The term polymer is used herein to describe both homopolymers and copolymers. Preferably, the binder polymer is film forming.

Suitable examples of addition polymers can be derived from acrylic acid esters and methacrylic acid esters, amides, nitriles, vinyl monomers such as styrene and its derivatives and vinyl esters such as vinyl acetate, vinyl versatate and di-alkyl maleate esters.

Using the nomenclature (meth)acrylate to represent both acrylate and methacrylate, suitable (meth)acrylic acid esters include the alkyl esters, preferably methyl (meth)acrylate, ethyl (meth)acrylate, propyl (meth)acrylate, butyl (meth)acrylate, 2-ethyl hexyl (meth)acrylate and alkoxy poly(oxyethylene) (meth)acrylate,. Small amounts of acrylic acid and/or methacrylic acid may also be used. Hydroxy functional monomers such as hydroxy ethyl (meth)acrylate and/or hydroxy isopropyl (meth)acrylate, may also be included. Preferably the addition polymer is derived from the esters of (meth)acrylic acid. More preferably the addition polymer is an acrylic polymer of minimum film forming temperature of from 0 to 30°C, more preferably from 1 to 10°C.

Suitable examples of condensation polymers include polyesters and polyurethanes. Urethane-acrylic hybrid polymers, where the urethane and acrylic addition polymer portion are closely associated may also be used.

The glass transition temperature, or Tg of the addition polymer may be varied by copolymerising monomers of appropriate Tg. Similarly, by varying the amount of hard and soft coreactants the Tg of the condensation polymers may also be varied. In this way polymers which are hard, soft or intermediate Tg can be made which can produce a range of desirable physical properties, such as hardness in the dried coating.

The film forming resin may be a solution polymer by which is meant that the polymer is dissolved in organic solvent or water; or a dispersion polymer where the polymer exists as particles dispersed in a liquid carrier medium. Such dispersions are often referred to as latexes.

Preferably the film forming resin is a dispersion polymer and more preferably the liquid carrier medium is substantially water. Such polymers are preferred since they can be conveniently made at high molecular weight and low viscosity resulting in dispersions, and therefore paints, at high solids. The weight average particle diameter of such latexes is preferably from 0.01 to 5 microns, more preferably from 0.05 to 3 microns and most preferably from 0.1 to 1 microns. Preferably they are made by emulsion polymerisation process.

The paint composition may also advantageously contain ingredients selected from the group consisting of pigments, fillers, extenders, solvents, plasticizers, flow additives, antifoams and antimicrobials.

Although the paint composition may be unpigmented, for example when a varnish or a clearcoat, generally the paint is pigmented to produce a chosen colour. Pigments are incorporated into the paint by the conventional methods of comminution in the presence of film forming resins or specifically designed pigment dispersants. Comminution of the pigment is most commonly achieved using ball mills, attritors or even very high speed stirring. Useful pigments include both the inorganic and organic type. Suitable examples of inorganic pigments include titanium dioxide. Suitable organic pigments include the azo and polycyclic pigments. Flake pigments, such as mica and pearls; the metallic pigments such as aluminium and bronze can also be used although they can generally be incorporated into the paint by simple stirring.

Preferably the paint composition is substantially free of multivalent metal ions soluble in the aqueous phase of the paint and which are capable of forming complexes with fatty acids and/or their salts. More preferably, the composition contains less than 1% by weight calculated on the overall composition, still more preferably less than 0.5%, yet more preferably, less than 0.1% and most preferably from 0.001 to 0.5%.
Examples of such ions include calcium, zinc and magnesium.

Such ions are most likely to be present in the inorganic components of the paint such as pigments, fillers and extenders. More preferably, any such pigments, fillers and extenders used in the composition are substantially free of these ions.

Paint compositions according to the invention and free of such ions have increased hardness and more complete hardness recovery on melting and re-setting. Whilst not wishing to be held to this, it is thought that the multivalent ions complex with the fatty acid thereby making the fatty acid unavailable to form the three dimensional matrix, thus reducing the hardness.
Figure 1 shows a cross sectional view, through the plane AB indicated on Figure 2, of a painting assembly of a paint composition of the invention formed into a body (1) part of which has penetrated into the structure of a foam (2) which is attached to the baseplate (3) by means of a layer of adhesive (4). A handle (5) is moveably attached to the baseplate.
Figure 2 shows the same assembly in perspective view.
Figure 3 shows the variation of paint block hardness against type and amount of fatty acid salt.

The ingredients used in the examples were obtained from the following suppliers
Baycure™ CX100 was obtained from Lanxess Ltd, Newbury, England.
Rocima™ V189 is a biocide and was obtained from Thor Specialities UK Ltd, Wincham Avenue, Wincham, Northwich, Cheshire, CW9 CGB, UK.
Texanol is an ester alcohol solvent and was obtained from Eastman Chemical Company.
Tamol™ 731A is a dispersant and was obtained from Rohm & Haas.
Disponil™ A1580 is a surfactant and was obtained from Henkel.
Dispelair™ CF246 is an antifoam and was obtained from Blackburn
Chemicals Ltd, Cunliffe Road, Whitebirk Industrial Estate, Lancashire, BB1 5SX, UK.
Microdol™ H200 is ground up dolomite (calcium magnesium carbonate) and was obtained from Omya, UK.
China Clay Supreme was obtained from Imerys UK Ltd.
Tioxide™ TR 92 was obtained from Huntsman Corporation Europe.
Blanose™ 7M31C is a thickener and was obtained from Hercules-Aqualon.
Revacryl™ A 1 was obtained from Synthomer Ltd,Central Road, Templefields, Harlow, Essex.
Behenic, capric, lauric, myristic and palmitic acids were obtained from Sigma-Aldrich Company Ltd, Fancy Road, Poole, Dorse, BH12 4QH
Prifrac™ 2980 is stearic acid (93-94% pure) and was obtained from Uniqema, Wilton, TS10 4RF, England.
Prifrac™ 2989 is behenic acid (90% pure) and was obtained from Uniqema, Wilton, TS10 4RF, England.
Univar Natrium stearate AV is approximately 2:1 by weight mixture of sodium stearate and sodium palmitate and was obtained from Univar, Cheadle, Cheshire, England.
Chance and Hunt Ltd, Alexander House, Crown Gate, Runcorn, Cheshire, WA7 2UP.
Diafil 570 is a diatomaceous earth and was obtained from CR Minerals Corporation.
Opacilite is a flash calcined kaolin available from Imerys.
Minex S40 is nepheline syenite (anhydrous sodium potassium alumino silicate) and was obtained from North Cape Minerals, Rud, Norway.

The paints were tested according to the following methods.

### Hardness

A Leatherhead Food Research Association texture analyser
(available from Brookfield Viscometers, Harlow, Essex, CM19 5TJ,Great Britain) was used to measure the hardness of the structured paint at 25°C +/-2°C.
The hot liquid paint sample at 40-50°C is poured into a 250 ml container and allowed
to cool overnight. The hardness is measured using a 4mm diameter stainless steel probe travelling at 1 mm s⁻¹ and 20 mm total travel.
The hardness quoted is the average of five measurements.

### Yield Stress

The samples were tested at 25°C using a Carrimed CSL 100 controlled stress Rheometer (available from TA Instruments of Leatherhead UK) operating in flow mode. A 2cm diameter parallel plate geometry is used. The plates are coated with silicon carbide paper (P360 grade) to give rough surfaces, which prevent slippage of the sample during the test. A slice is cut from the paint bar and loaded between the plates with an initial gap setting of 3mm. The gap is then closed to 0.5 mm, at a slow rate to minimise damage to the gel structure. After a delay of 3 minutes for temperature equilibration the shear stress is gradually increased, in a continous logarithmic fashion. The scan is set for a duration of 2 minutes with limits of 10 Pa and 6000 Pa.

The yield stress is obtained from a graph of log viscosity versus log shear stress. The viscosity is very high initially (> 10000 Pa.s) and declines gradually with increasing shear stress until the yield stress is approached. At this point the viscosity falls very sharply to values below 10 Pa.s. The yield stress value is determined graphically from the extrapolated onset of this rapid fall in viscosity.

### Melting temperature

The melting temperature is estimated by measuring the storage Modulus as a function of temperature using a Carrimed CSL 100 controlled stress rheometer or similar, available from TA Instruments of Leatherhead, UK. The oscillatory shear mode is employed with a fixed frequency of 1 Hz and a shear strain amplitude of 0.01. The sample is loaded as described in the method for yield stress above. To minimise evaporation of water the edge of the sample is protected by a layer of oil as well as by the standard Carrimed solvent trap. The temperature is cycled between 25°C and 70°C with a total cycle time of 20 minutes. A plot of the storage modulus against temperature shows that the storage modulus initially has a high value ( > 10000Pa). It remains approximately constant as the temperature rises until the melting temperature is approached when it falls sharply to low values ( < 100 Pa). On cooling the storage modulus remains low until the re-solidification temperature is approached, when the storage modulus rises sharply back to high values. The melting temperature and the re-solidification temperature are obtained from the extrapolated onset temperatures for the sharp fall and sharp rise in storage modulus respectively.

### Cone and Plate viscosity

The hot liquid paint is decanted into a 250 ml lacquered can, allowed to cool and solidify overnight. It is then place on a high speed disperser fitted with a turbine stirrer blade and sheared for about 5 minutes or until it becomes a bit-free, liquid. A sample of the liquid paint is immediately transferred to the ICI cone and plate high shear viscometer and allowed to equilibrate to 23 °C. The viscosity is then measured at a shear rate of 10,000s⁻¹.

### Rotothinner viscosity

A sample of the paint in solid form is prepared in the same way as for the cone and plate viscosity measurement. The sample of the liquid paint is then measured at 23°C using a Rotothinner viscometer, available from Sheen Instruments of Kingston-upon-Thames, UK. The standard disc rotor is used for viscosities in the range 0 to 1.5 Pa.s. The standard ball rotor is used for viscosities between 1.5 and 10 Pa.s. Approximate, average shear rates are 300 s⁻¹ and 50s⁻¹ for the disc and the ball respectively.

### Examples

The invention will now be illustrated by the following examples.

### Example 1

An aqueous vinyl matt white emulsion paint having the following parameters was prepared using the ingredients of Table 1.
non vol 59 wt%
PVC (vol/vol) 60%
pH 9.3
total solvent 2.8 wt% (2% Texanol™, 0.8% Benzyl alcohol)

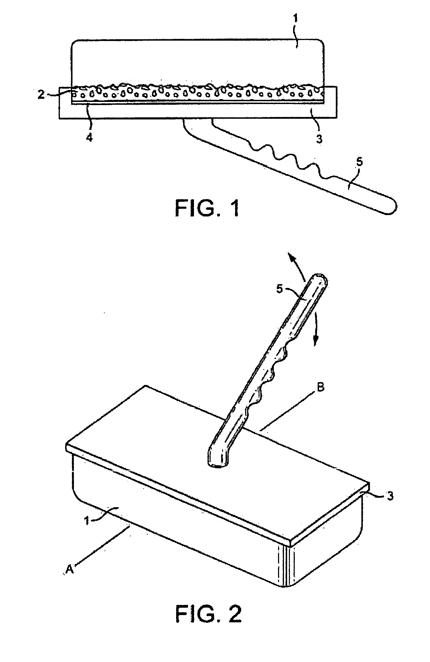

Following addition of the fatty acid salt (15), the coating composition is heated to 80°C whilst stirring and held at this temperature for 90 minutes after which time it is poured into sealable block shaped moulds of approximately 15cm x 10cm x 3cm and allowed to cool and solidify overnight. At the base of each mould is a removable base plate, one side of which is covered with an absorbent material, in this case a reticulated, that is, open cell, foam. When the hot liquid paint is poured into the mould, some of it flows into the foam. On cooling, the paint solidifies into a dimensionally stable block of paint attached to the plate via the foam. The plate is arranged to have attachment means on the face opposite the paint to which a handle is moveably attached to enable a painter to use the combined assembly to paint a wall or ceiling. The hinging movement of the handle relative to the base plate (indicated by the arrows in Figure 2) allows the paint body surface to maintain even contact with the substrate irrespective of the orientation relative to the user.

**Table 1**

| | wt% |
|---|---|
| 1 Water | 16.00 |
| 2 Benzyl alcohol | 0.80 |
| 3 Texanol | 1.99 |
| 4 Carboxylated pigment | 1.99 |
| dispersant | |
| 5 Defoamer | 0.15 |
| 6 Dolomite | 11.95 |
| 7 China Clay | 10.00 |
| 8 Rutile TiO₂ | 26.90 |
| 9 Water | 6.89 |
| 10 HMHEC¹ | 0.15 |
| 11 Biocide | 0.02 |
| 12 Latex² | 19.98 |
| 13 Ammonia (0.880) | 0.15 |
| 14 Defoamer | 0.03 |
| 15 Fatty acid salt³ | 3.00 |

| | |
|---|---|
| ¹ Hydrophobically Modified Hydroxy Ethyl Cellulose ² MMA/BA/AA latex terpolymer of52.5wt% solids Tg -6°C ³ 60/40 mixture of sodium stearate and sodium palmitate from Chance and Hunt | |

The block of paint was removed from the mould and a handle was attached to the base plate. The block of paint was dimensionally stable.

### HSV was measured as 0.24 Pa.s

When the exposed surface of the block was wiped across a plasterboard substrate previously painted with blue Dulux™ vinyl matt the coating composition flowed and left a dried coating of approximately 40 microns thereon. No paint spatter or sags were observed. The paint block remained intact and dimensionally stable. Users found the paint in this form to be conveniently quick and easy to apply.

The mechanical and water resistance properties of the dried coating were evaluated and found to be acceptable.

### Examples 2, 3

The procedure and ingredients of example 1 were used except that a thermal stabilising agent, in the form of sodium chloride was added after the latex (12) was added, at a level of 0.25 wt% and 0.5 wt% (examples 2 and 3 respectively). The water charge (1) was reduced by equivalent amounts.

The HSV of examples 2 and 3 were 0.25- 0.26 Pa.s and the pH was 9.31 and 9.34 respectively

The hardness and application properties of the paint are summarised in Table 2.

**Table 2**

| **Example** | **NaCl level wt%** | **Hardness g** | **Solidity** | **Ease of Application** |
|---|---|---|---|---|
| 1 | 0 | 75 | Soft solid | Very easy |
| 2 | 0.25 | 173 | Harder solid | Easy |
| 3 | 0.50 | 333 | Hard solid | Easy-but more difficult than 2 |

For reference, a 'solid emulsion' paint of EP 144135 available from ICI Paints has a hardness of 30g.

Paint examples 1 to 3 were stored at 40°C for 4 weeks. At this temperature example 1 had melted whereas examples 2 and 3 both remained solid. They were then removed from the incubator and the hardness measured at the following times and conditions
i) as made and measured at 25°C
ii) stored at 40°C for 4 weeks and measured at 40°C
iii) as ii) but allowed to cool to 25°C before measurement
iv) as iii) but measured after 5 hours at 25°C
v) as iv) but measured after a further 11 hours at 25°C

The data is summarised in Table 3.

**Table 3**

| | **Thermal stabilising agent** | **Hardness g** | | | | |
|---|---|---|---|---|---|---|
| Example | NaCl level % | i)* | ii)* | iii)* | iv)* | v)* |
| 1 | 0 | 47 | 17 | 7 | 14 | 14 |
| 2 | 0.25 | 88 | 45 | 13 | 29 | 57 |
| 3 | 0.50 | 105 | 70 | 32 | 70 | 98 |

| | | | | | | |
|---|---|---|---|---|---|---|
| *see above for legends i)-v) | | | | | | |

It is evident that as the level of sodium chloride is increased, surprisingly not only does the hardness as made increase, but the paint also recovers a greater proportion of its original, pre-melted hardness.

### Examples 4 to 7

The procedure and ingredients of example 1 were used except that tetrasodium pyrophosphate was added after the latex addition, (12) at a level of 0.1, 0.25, 0.50 and 1.00 wt% respectively. The water addition (1) was reduced by the equivalent amount.

### Examples 8 to 10

The procedure and ingredients of example 1 were used except that Baypure CX100 (tetrasodium iminodisuccinate) was added after the latex addition at a level of 1.06, 1.27 and 2.00 wt% respectively. The tap water addition (1) was reduced by the equivalent amount.

Example 1 was repeated as a control.

The blocks of paint were removed from the moulds and handles attached to the base plate. The blocks of paint were dimensionally stable.

When the exposed surface of the blocks was wiped across a plasterboard substrate previously painted with blue Dulux™ vinyl matt the coating composition flowed and left a dried coating of approximately 20 to 40 microns thereon. No paint spatter or sags were observed. The paint blocks remained intact and dimensionally stable. Users found the paints in this form to be conveniently quick and easy to apply.

The mechanical and water resistance properties of the dried coating were evaluated and found to be acceptable.

### Results

The hardness of the paint block examples 1 and 4-10 were measured at 25°C
i) immediately after cooling to 25°C following manufacture and after storage at 40°C for 4 weeks.

The paint blocks were also measured after remelting, by heating to 80°C, and allowed to cool to 25°C.

The hardness values are summarised in Table 4.

**Table 4**

| | | | Hardness g | | |
|---|---|---|---|---|---|
| Example | Thermal stabilising agent | Level wt% | As made | 4 weeks at 40°C | Remelted |
| 1 | None | None | 64 | 0 | 45 |
| 4 | TSPP | 0.10 | 56 | 12 | 31 |
| 5 | TSPP | 0.25 | 55 | 55 | 50 |
| 6 | TSPP | 0.50 | 151 | 143 | 154 |
| 7 | TSPP | 1.00 | 306 | 245 | 298 |
| 8 | Baycure CX100 | 1.06 | 77 | 70 | 48 |
| 9 | Baycure CX100 | 1.27 | 168 | 189 | 141 |
| 10 | Baycure CX100 | 2.00 | 139 | 118 | 122 |

| | | | | | |
|---|---|---|---|---|---|
| TSPP is tetrasodium pyrophosphate Baycure CX100 is tetrasodium iminodisuccinate | | | | | |

As can be seen, both tetrasodium pyrophosphate and tetrasodium iminodisuccinate can increase the hardness of the paint and improve the storage stability at elevated temperatures.

### Further Examples

### Example 11

An aqueous vinyl matt white emulsion paint was prepared using the ingredients of Table 5 and the procedure described below.

**Table 5**

| | wt% |
|---|---|
| Stage 1 | |
| Millbase | |
| 1 Water | 23.473 |
| 2 Rocima V 189 | 0.197 |
| 3 Texanol | 0.963 |
| 4 Tamol 731 A | 1.444 |
| 5 Disponil A1580 | 0.193 |
| 6 Dispelair CF246 | 0.144 |
| 7 Microdol H200 | 4.332 |
| 8 China Clay Supreme | 13.477 |
| 9 Tioxide TR92 | 25.557 |
| 10 Water | 1.579 |
| 11 Blanose 7M31C | 0.529 |
| 12 Water | 2.408 |

| Stage 2 | |
|---|---|
| Paint | |
| 13 Revacryl A 1 | 18.768 |
| 14 Dispelair CF246 | 0.144 |
| 15 Ammonia (0.880) | 0.038 |
| 16 Sodium hydroxide | 0.369 |
| 17 Water | 3.754 |
| 18 Prifrac 2980 | 2.631 |
| | 100.000 |

To a high speed disperser (Dispermat), add ingredients 1 to 6 and stir at 2000rpm for about 5 minutes. Continue stirring at 2000 rpm and add ingredients 7 to 9. Keep stirring for a further 10 minutes and then add ingredient 10 followed by 11. Ingredient 11 should be added slowly as it causes the viscosity of the mixture to rise. The stirrer speed will need to be increased to about 4000 rpm. Stir for a further 20 minutes gradually adding ingredient 12. Check for fineness of grind using a Hegmann gauge. The reading should be less than 10 microns. The millbase is transferred to a vessel fitted with gentle stirrer means and ingredients 13 to 15 added. Whilst stirring, ingredient 16 is dissolved in ingredient 17 and added to the vessel. Finally ingredient 18 is added with sufficient stirring to ensure that it is effectively incorporated into the paint. The temperature of the paint is raised to 80°C and held at that temperature for a further 90 minutes. After cooling to 50°C, the paint was poured into sealable block shaped moulds of the type used in example 1 and allowed to cool and form solid paint blocks.

The paint contained 3wt% of sodium stearate.
non vol 57 wt%
PVC (vol/vol) 59%
pH 9.68

### Example 12

Example 12 used the same ingredients as Example 11 except that the level of Prifrac 2980 was raised to 5% and sodium hydroxide increased accordingly to maintain a 1:1 mole ratio of fatty acid to sodium hydroxide. The paint formulation was adjusted accordingly to maintain approximately the same PVC and wt solids as in Example 11.

### Examples 13 to 20

Examples 13 to 20 used the same ingredients as Example 11 except that the stearic acid was replaced with capric acid (99% pure), lauric acid (99.5% pure), myristic acid (95% pure), palmitic acid (99% pure) and behenic acid (98% pure) in turn at the levels shown in Table 6. The mole ratio of fatty acid to sodium hydroxide was maintained at 1:1 irrespective of which fatty acid was used.

All the compositions were formed into solid paint blocks and a handle attached to each base plate to facilitate application.

Paint examples 11 to 20 were applied, using a wiping action, to a plasterboard substrate previously coated with blue Dulux™ vinyl matt paint. Table 6 also summarises the evaluation of the paint compositions. The mechanical and water resistance properties of all of the paints were acceptable.

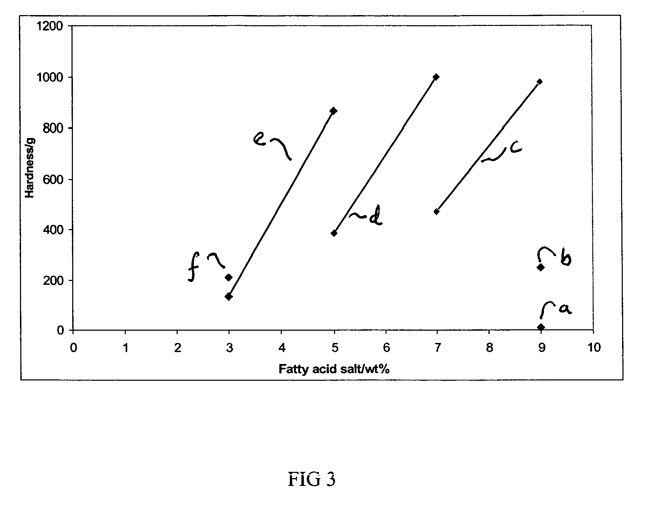

Figure 3 is a plot of the hardness data versus the type and amount of fatty acid salt where (a) represents the data for sodium capricate, (b) is for sodium laurate, (c) is the line for sodium myristate, (d) is for sodium palmitate, (e) is for sodium stearate and (f) is for sodium behenate.

The results show that self-supporting paint compositions can be made using fatty acid salts of various chain lengths. As the hardness of the paint increases, the high shear viscosity, as measured on the cone and plate viscometer, also increases. These increases cause the application properties of the paint to deteriorate making it difficult for the paint to liquefy and flow in the high shear region.

### Examples 21 to 23

Paint examples 21 to 23 were made using the same ingredients and procedure as example 11 except that 0.25 wt% of a thermal stabilising agent was added to the composition, as a mixture with ingredient 18. The amount of ingredient 17 was reduced accordingly. The paints were evaluated using the same procedure as examples 11 to 20. Table 7 summarises the data.

No paint spatter or sags were observed. The paint block remained intact and dimensionally stable. Users found the paint in this form to be conveniently quick and easy to apply. Furthermore, after heating the paints above their melting temperatures and allowing them to cool, each recovered most of the original hardness.

**Table 6**

| Example | Composition | Hardness G | Yield stress Pa | Melting temp °C | Viscosity¹ Pa.s | Comments |
|---|---|---|---|---|---|---|
| 11 | 3% stearic acid²/NaOH | 137 | 2911 | 44 | 0.26 | Solid. Very easy to apply |
| 12 | 5% stearic acid²/NaOH | 867 | 4850 | NA | >0.50 | Solid. Very difficult to apply |
| 13 | 9% capric acid/NaOH | NA³ | NA | NA | 0.18 | Did not form structure. Liquid |
| 14 | 9% lauric acid/NaOH | 255 | 5212 | 31 | 0.24 | Solid. Easy to apply |
| 15 | 7% myristic acid/NaOH | 468 | NA | NA | 0.48 | Solid. Difficult to apply |
| 16 | 9% myristic acid/NaOH | 982 | NA | 37 | >0.50 | Solid. Very difficult to apply |
| 17 | 5% palmitic acid/NaOH | 384 | 4467 | 44 | 0.35 | Solid. Reasonable to apply |
| 18 | 7% palmitic acid/NaOH | >1015 | NA | NA | >0.50 | Solid. Very difficult to apply |
| 19 | 3% behenic acid/NaOH | 207 | 2105 | NA | 0.33 | Sticky. Difficult to apply as a thin even layer |
| 20 | 3% behenic acid/NaOH/ KOH 1:1 | NA³ | 479 | 56 | 0.17 | Did not form structure. Non-drip consistency |

| | | | | | | |
|---|---|---|---|---|---|---|
| NA indicates that the data is not available ¹ Measured on a cone & plate viscometer at 10,000 s⁻¹ ²As Prifrac 2980 ³Too low to measure reliably All examples had solids of from 55 to 57.7% by weight and pH from 9.34 to 9.69 | | | | | | |

**Table 7**

| Example | Composition | TSA² Type/wt% | Hardness g | | Viscosity¹ Pa.s | Melting temp. °C | Comments |
|---|---|---|---|---|---|---|---|
| | | | As made | Remelted³ | | | |
| 11 | 3% stearic acid/NaOH | -/0 | 137 | NA | 0.26 | NA | Solid. Very easy to apply |
| 21 | 3% stearic acid/NaOH | NaCl/0.25 | 249 | 255 | 0.22 | 29.5 | Solid. Easy to apply |
| 22 | 3% stearic acid/NaOH | TSPP/0.25 | 279 | 259 | 0.20 | 61 | Solid. Easy to apply |
| 23 | 3% stearic acid/NaOH | BaypureCX100 /0.25 | 220 | 245 | 0.20 | NA | Solid. Easy to apply |

| | | | | | | | |
|---|---|---|---|---|---|---|---|
| All examples were between 56.8 and 57.5% solids by weight and at pH from 9.32 to 9.68. NA indicates that the data is not available Stearic acid was in the form of Prifrac 2980 ¹ Measured on a cone & plate viscometer at 10,000 s⁻¹ ² Thermal Stabilising Agent ³ Heated for 30 minutes at 80°C, cooled overnight and measured at 25°C | | | | | | | |

### Examples 24 and 25

These examples are variations of the sodium stearate/TSPP formulation, example 22.

### Example 24

An aqueous vinyl matt white emulsion paint was prepared using the ingredients of Table 8 and the procedure described below.

The paint contained 2.7 wt% of sodium stearate.

| | |
|---|---|
| non vol | 53 wt% |
| pH | 10.0 |

**Table 8**

| | wt% |
|---|---|
| Stage 1 | |
| Millbase | |
| 1 Water | 12.500 |
| 2 Benzyl alcohol | 0.600 |
| 3 Texanol | 1.600 |
| 4 Tamol 731 A | 1.600 |
| 5 Polyethylene glycol 400 | 1.000 |
| 6 Dispelair CF246 | 0.150 |
| 7 Opacilite | 5.500 |
| 8 Microdol H200 | 4.000 |
| 9 Microdol H600 | 8.500 |
| 10 Tioxide TR92 | 22.000 |
| 11 Water | 4.980 |
| 12 Natrosol plus grade 330PA | 0.120 |

| Stage 2 | |
|---|---|
| Paint | |
| 13 Rocima V 189 (biocide) | 0.020 |
| 14 Water | 6.000 |
| 15 Acrylic latex* | 16.000 |
| 16 Dispelair CF246 | 0.150 |
| 17 Ammonia (0.880) | 0.030 |
| 18 Water | 12.100 |
| 19 Univar Natrium stearate | 2.700 |
| AV | |
| 20 Tetra sodium pyrophosphate | 0.450 |
| | 100.000 |

To a high speed disperser (Dispermat), add ingredients 1 to 6 and stir at 2000rpm for about 5 minutes. Continue stirring at 2000 rpm and add ingredients 7 to 10. Keep stirring for a further 10 minutes and then add ingredient 11 followed by 12. Ingredient 12 should be added slowly as it causes the viscosity of the mixture to rise. The stirrer speed will need to be increased to about 4000 rpm. Stir for a further 20 minutes. Check for fineness of grind using a Hegmann gauge. The reading should be less than 10 microns. The millbase is transferred to a vessel fitted with gentle stirrer means and ingredients 13 to 18 added. Ingredient 19 is added with sufficient stirring to ensure that it is effectively incorporated into the paint followed by ingredient 20. The temperature of the paint is raised to 80°C and held at that temperature for a further 90 minutes. After cooling to 50°C, the paint was poured into sealable block shaped moulds of the type used in example 1 and allowed to cool and form solid paint blocks.

### Example 25

Example 25 is substantially free of multivalent metal ions.
An aqueous vinyl matt white emulsion paint was prepared using the ingredients of Table 9 and the procedure described for example 24.

The paint contained 2.7 wt% of sodium stearate.

| | |
|---|---|
| non vol | 50 wt% |
| pH | 10.0 |

**Table 9**

| | wt% |
|---|---|
| Stage 1 | |
| Millbase | |
| 1 Water | 11.785 |
| 2 Benzyl alcohol | 0.562 |
| 3 Texanol | 1.508 |
| 4 Tamol 731 A | 1.508 |
| 5 Polyethylene glycol 400 | 0.946 |
| 6 Dispelair CF246 | 0.141 |
| 7 Diafil 570 | 2.070 |
| 8 Minex S40 | 14.389 |
| 9 Tioxide TR92 | 20.749 |
| 10 Water | 4.693 |
| 11 Natrosol plus 330PA | 0.225 |

| Stage 2 | |
|---|---|
| Paint | |
| 12 Rocima V189 (biocide) | 0.019 |
| 13 Water | 5.658 |
| 14 Acrylic latex* | 15.082 |
| 15 Dispelair CF246 | 0.141 |
| 16 Ammonia (0.880) | 0.028 |
| 17 Water | 17.330 |
| 18 Univar Natrium stearate | 2.717 |
| AV | |
| 19 Tetra sodium pyrophosphate | 0.450 |
| | 100.000 |

The paintblock was prepared using the same procedure as example 24.
*The acrylic latex has the following characteristics:
Solids content 52%
Calculated Fox Tg -6°C
Monomer composition methyl methacrylate/ethyl hexyl acrylate/acrylic acid
Anionic/non-ionic surfactant/sodium carboxy methyl cellulose stabilised.

### Results

The hardness of each paint block was measured initially and following periods of storage at 40°C as indicated below
i) hardness measured overnight following manufacture.
ii) hardness measured at 40°C after 4 days storage at 40°C.
iii) hardness measured at 25°C after cooling to 25°C.
iv) hardness measured at 40°C after further 3 days storage at 40°C.
v) hardness measured at 25°C after cooling to 25°C.
vi) hardness measured at 40°C after further 7days storage at 40°C.
vii) hardness measured at 25°C after cooling to 25°C.
viii) hardness measured at 40°C after further 7days storage at 40°C.
ix) hardness measured at 25°C after cooling to 25°C.

Table 10 summarises the data

**Table 10**

| | Hardness/g | | | | | | | | |
|---|---|---|---|---|---|---|---|---|---|
| Example | i)* | ii)* | iii)* | iv)* | v)* | vi)* | vii)* | viii)* | ix)* |
| 24 | 102 | 41 | 79 | 38 | 73 | 43 | 68 | 39 | 68 |
| 25 | 183 | 63 | 172 | 82 | 181 | 78 | 180 | 80 | 173 |

It is evident that the hardness values of example 25 are consistently higher than for example 24 and recover more completely following exposure to elevated temperature.

## Claims

1. An aqueous paint composition comprising
i) a binder polymer
ii) a salt of a fatty acid of linear chain length of from 10 to 26 carbon atoms
said composition capable of being formed into a self-supporting, dimensionally stable paint body

2. An aqueous paint composition according to claim 1 when formed into a self-supporting, dimensionally stable paint body for applying directly to substrates by contacting an exposed surface of the body onto the substrate and which under the application of sufficient shear stress and/or shear rate in the contact zone between the composition and the substrate renders the composition flowable.

3. An aqueous paint composition according to claim 1 or claim 2 which is free of material, other than the salt of the fatty acid, which imparts thixotropic rheology behaviour to the paint.

4. A paint composition according to any one of the preceding claims wherein the fatty acid of the fatty acid salt comprises a saturated aliphatic acid.

5. A paint composition according to any one of the preceding claims wherein the salt of the fatty acid comprises at least 1% by weight based on the total composition.

6. A paint composition according to claim 5 wherein the salt of the fatty acid comprises from 2 to 5% when the salt is derived from arachidic or behenic acid; or from 2.5 to 7% when derived from stearic acid; or from 4 to 7% when derived from palmitic acid; or from 5 to 8% when derived from myristic acid; or from 8 to 14% when derived from capric or lauric acid based on the total composition.

7. A paint composition according to any one of the preceding claims wherein the salt of the fatty acid salt comprises an alkali metal salt.

8. A paint composition according to claim 7 wherein the alkali metal salt is the sodium salt.

9. A paint composition according to any one of the preceding claims which further comprises a thermal stabilising agent.

10. A paint composition according to claim 9 wherein the thermal stabilising agent is selected from the group consisting of alkali metal halides and sequestering agents.

11. A paint composition according to claim 10 wherein the thermal stabilising agent is selected from the group consisting of sodium chloride, tetrasodium pyrophosphate and tetrasodium iminodisuccinate.

12. A paint composition according to any one of claims 9 to 11 wherein the thermal stabilising agent comprises from 0.1 to 5.0% by weight calculated on the total composition.

13. A paint composition according to any one of the preceding claims having a yield stress of at least 350 Pa measured at 25°C.

14. A paint composition according to any one of the preceding claims and further comprising up to 15% by weight of water insoluble organic solvent, calculated on the total composition.

15. A paint composition according to any one of the preceding claims having a high shear viscosity of from 0.05 to 0.5 Pa.s when measured at 10,000 s⁻¹ and 23°C and in accordance with the method described in this specification.

16. A paint composition according to any one of the preceding claims having a melting temperature of at least 40°C.

17. A paint composition according to any one of the preceding claims having a hardness of from 50 to 750g when measured in accordance with the method described in this specification.

18. A paint composition according to any one of the preceding claims and which also contains ingredients selected from the group consisting of pigments, fillers, waxes, extenders, rheological modifiers, dispersants, flow aids and biocides.

19. A paint composition according to any one of the preceding claims which is substantially free of multivalent metal ions soluble in the aqueous phase of the paint and which are capable of forming complexes with fatty acids.

20. A paint composition according to claim 18 wherein the pigments, fillers or extenders used are substantially free of multivalent metal ions soluble in the aqueous phase of the paint and wherein the ions are capable of forming complexes with fatty acids.

21. A process of making a paint composition of any one of the preceding claims comprising the steps of
i) providing a mixture comprising film forming resin, fatty acid salt and optionally thermal stabilising agent
ii) converting the mixture into a paint composition
iii) causing the temperature of the paint composition to at least exceed the melting temperature of the fatty acid salt
iv) allowing or causing the temperature of the paint composition to fall below its melting temperature so that it becomes dimensionally stable at temperatures below 40°C.

22. A process of painting using a paint composition according to any one of the claims 1 to 20 comprising contacting an exposed surface of the paint body onto a substrate to be coated and applying sufficient shear stress in the contact zone between the composition and the substrate such that the yield point of the paint is exceeded whereby the coating flows to leave a substantially uniform coating layer on the substrate.

23. A structure, part of a structure or article painted with a paint composition according to any one of claims 1 to 20.

24. Use of a structuring agent system in an aqueous paint composition to provide a self-supporting dimensionally stable paint body wherein the system comprises
i) a salt of a fatty acid of linear chain length of from 10 to 26 carbon atoms
ii) a thermal stabilising agent.

25. An aqueous paint composition when formed into a self-supporting, dimensionally stable block of paint carried on an application member.
